# EUROPÄISCHE PATENTSCHRIFT

(11) **EP 1 648 727 B1**
(45) Veröffentlichungstag und Bekanntmachung des Hinweises auf die Patenterteilung: **01.04.2009**
(21) Anmeldenummer: 04741110.3
(22) Anmeldetag: 16.07.2004
(51) Int. Cl.: B60K 15/05

(54) **TANKMULDE AUS KUNSTSTOFF**
PLASTIC FUEL INLET COMPARTMENT
COMPARTIMENT D'ENTREE DE RESERVOIR EN MATIERE PLASTIQUE

(30) Priorität: 18.07.2003 DE 20311149 U
(43) Veröffentlichungstag der Anmeldung: 26.04.2006
(73) Patentinhaber: Dr. Schneider Kunststoffwerke GmbH, 96317 Kronach-Neuses (DE); ITW Automotive Products GmbH & Co. KG, 58636 Iserlohn (DE)
(72) Erfinder: ENGEL, Ralf, 96227 Schneckenlohe (DE)
(74) Vertreter: Kinnstätter, Klaus
(86) Internationale Anmeldenummer: PCT/EP2004/007990
(87) Internationale Veröffentlichungsnummer: WO 2005/009771

(56) Entgegenhaltungen:
- EP-A- 0 736 406
- EP-A- 1 281 558
- DE-C- 3 209 007
- US-A- 5 664 811

## Beschreibung

Die Erfindung betrifft eine Tankmulde aus Kunststoff zum Einsetzen in einen Karosseriedurchbruch in einem Kraftfahrzeug.

Bei Kraftfahrzeugen, insbesondere bei Personenkraftfahrzeugen, ist es bekannt, die Tankzuleitung in einer Tankmulde enden zu lassen und die Tankzuleitung mittels eines Drehverschlusses zu verschließen. An der Tankmulde befindet sich ein Schwenklager für einen Lagerhebel einer Klappe, deren Schwenkradius so verläuft, dass in geschlossenem Zustand die Klappe die Tankmulde zum einen abdeckt und zum anderen mit der anschließenden Karosserieoberfläche eine Einheit bildet. Die Klappe selbst ist am vom Lagerende gegenüberliegenden Ende durch ein Verriegelungs- oder Schlosssystem gesichert gehalten. Wird die Verriegelung aufgehoben, beispielsweise ein Querriegel aus einem Verriegelungsansatz herausgezogen, so kann die Klappe geöffnet werden.

Es ist ferner bekannt, die Klappe mittels einer Feder in eine geringfügige Aufstellöffnung zu verbringen, aus der sie dann leicht per Hand geöffnet werden kann. Es ist ferner als Lösung bekannt, eine Push-Push-Verbindung zu verwenden, um hierüber die Klappe um einen Spalt zu öffnen und danach per Hand in die größtmögliche Aufstellposition zu verschwenken, um an den Einfüllstutzen der Tankzuleitung nach dem Abschrauben des Tankdeckels gelangen zu können.

Die Tankmulde bei bekannten Ausführungen besteht aus Blech und ist an der Karosserie durch Punktschweißung angeschweißt. Des Weiteren sind die Verschließeinrichtungen bei bekannten Ausführungen an der Karosserie befestigt um den Tankdeckel verschließen zu können, wobei der Riegel in den Innenraum der Tankmulde hinein vorsteht und in die Verriegelungsöffnung an der Rückseite der Klappe eingreift. Es ist ersichtlich, dass eine solche Verriegelungseinrichtung, die insbesondere unter dem Kotflügel an diesem angebracht ist, verschmutzen kann. Es müssen ferner Justierarbeiten vorgenommen werden, um ein einwandfreies Verschließen und Öffnen der Klappe zu gewährleisten, zu welchem Zweck ein mechanische Öffner des Riegels einjustiert werden muss, was wegen der erschwerten Zugänglichkeit mit einem hohen Zeitaufwand verbunden ist. Darüber hinaus muss die Klappe vor Ort montiert werden.

Der nächstliegende bekanntgewordene Stand der Technik ist der DE 3209007 zu entnehmen.

Der Erfindung liegt die Aufgabe zugrunde, eine Tankmulde so zu gestalten, dass sie als vollständige Einheit vormontiert werden kann und dass sie auf einfache Weise in einen Durchbruch in einer Karosseriewand einsetzbar ist. Die Teile sollen darüber hinaus unempfindlich gegen Benzin, Dieselöl oder auch Gas sein, je nachdem, welche Kraftstoffe für den Motor getankt werden.

Die Aufgabe löst die Erfindung durch Ausgestaltung der Tankmulde gemäß der im Anspruch 1 angegebenen technischen Lehre.

Vorteilhafte Weiterbildungen der Erfindung sind in den Unteransprüchen detailliert angegeben.

Die Tankmulde ist als Trägerbauteil aus Kunststoff gefertigt und so ausgebildet, dass sie in einem vorgesehenen Karosseriedurchbruch, z. B. einem Kotflügel, vollständig im vormontierten Zustand eingesetzt werden kann. Sie weist zu diesem Zweck ein vertikal verlaufendes Schwenklager für einen Lagerhebel einer Klappe auf. Der Lagerhebel wird an dem Schwenklager mittels Lagerbolzen befestigt, bevor die Tankmulde in die Aussparungsöffnung in der Karosseriewand eingesetzt wird. Die an dem Lagerhebel befestigte Klappe verschließt dabei die Zugangsöffnung der Tankmulde vollständig. Die Tankmulde weist mindestens in einer Ecke eine Verschließeinrichtung auf, die in eine ausgeformte Lagerkammer eingesetzt ist. Diese Verschließeinrichtung kann von der Tankmuldeninnenseite in eine solche Lagerkammer eingesetzt werden oder aber auch in eine außenseitig ausgeformten Lagerkammer. Das Verschließelement der Einrichtung ragt in den Tankmuldenraum hinein. Dieses Verschließelement kann z. B. ein drehbarer Haken oder ein verschiebbarer Riegel sein, der die Klappe im geschlossenen Zustand festhält, zu welchem Zweck das Verschließelement mit einem korrespondierenden Element an der Klappenrückseite zusammenwirkt. Damit nun eine einfache Montage der Tankmulde in der Karosserie möglich ist, ist weiterhin vorgesehen, dass an den Außenseiten der Mantelwände zur Verrastung der Tankmulde oder zur Schraubbefestigung Befestigungselemente entsprechender Art vorgesehen sind, die die Karosseriewand hintergreifen bzw. an dieser oder an anderen Befestigungsträgern anschraubbar oder ansteckbar sind.

Das Schwenklager kann - je nach Ausbildung des Lagerhebels der Klappe - in der Tankmulde selbst angeordnet sein oder aber auch in einer an einer Seitenwand seitlich angefügten und ausgeformten Lagerkammer. Der Lagerhebel weist einen bogenförmigen Abschnitt auf, um den Schwenkbewegungsablauf sicherzustellen, der das Verschließen und das Öffnen der Klappe ohne Anstoßen an die übrigen Wandteile gewährleistet. Die Klappe, die die Öffnung verschließt, kann als separates Bauteil so ausgebildet sein, dass es an dem ebenen Abschnitt des Lagerhebels anklippbar oder mittels Befestigungsringe oder Rastverbinder befestigbar ist. Dies ist von Vorteil, wenn lackierte Klappen verwendet werden sollen, so dass an ein und demselben Schwenklagerhebel nachträglich Klappen mit unterschiedlichen farblichen Oberflächen befestigbar sind. Das Schwenklager ist so ausgebildet, dass der Lagerhebel mit einer senkrechten Lagerbohrung zwischen zwei Lagerbohrungen des Lagers einfügbar ist und mittels eines Lagerbolzens arretiert wird. Der Lagerbolzen ist so ausgebildet, dass er verdrehsicher in die Lagerbohrung des Lagerhebels eingreift, so dass sich der Bolzen automatisch bei der Schwenkbewegung mit dreht. Dies ist von Vorteil, wenn die Klappe mittels einer Feder aufgeschwenkt wird, wenn die Verschließeinrichtung sich in der Entriegelungsstellung befindet. Ein solcher drehbarer Lagerbolzen kann selbstverständlich auch mit einer Bremseinrichtung zusammenwirken, um ein gleichbleibendes Drehmoment beim Aufschwenken zu gewährleisten. Ferner kann zur Dämpfung der Bewegung ein Bremselement in Verlängerung auf den Bolzen gesteckt sein. Dieses Bremselement ist dann verdrehgesichert gelagert und bewirkt ein gedämpftes Öffnen. Eine solche Vorrichtung ist in der DE 203 05 291 U1 angegeben und kann hier eingesetzt werden.

In der Rückwand der Mulde können eine oder auch zwei Durchgangsöffnungen für die Anschlüsse von Tanks vorgesehen sein. Bei der Zweifachausführung, beispielsweise für die bivalente Gasbetankung, sind solche Anschlüsse vorgesehen Da ein solcher Durchgang nur bei bestimmten Fahrzeugen benötigt wird, kann in der Rückwand die zweite Öffnung durch eine Schwächungsnaht im Kunststoff als Ausbrechteil markiert sein, das im Bedarfsfall auf einfache Weise ausbrechbar ist, z. B. durch Stoßeinwirkung. Eine solche Öffnung kann selbst im verbauten Zustand der Tankmulde in diese eingebracht werden.

Die Erfindung in ihrer Kombination ist auf verschiedene Formen der Tankmulde anwendbar. Die Tankmulde kann im wesentlichen rechteckig, mit eckigen oder gerundeten Ecken, ausgebildet sein. Sie kann aber auch rund oder oval ausgeformt sein. Es versteht sich dabei von selbst, dass die Klappe die entsprechende Formanpassung aufweisen muss, um die Öffnung der Tankmulde verschließen zu können.

Der Fertigungsvorteil bei einer Tankmulde nach der Erfindung ist offensichtlich. Es können alle Elemente schon vormontiert werden und die vormontierten Verschließelemente justiert und die Einheit in ein Fahrzeug mühelos in die vorgesehene Öffnung in der Karosserie eingesetzt werden. Die Befestigung in der Öffnung selbst erfolgt ebenfalls durch angespritzte Rastelemente. Dies können federnde, rückzugssichernde Zungen mit Rastnasen oder Sperrflächen oder aber auch Öffnungen sein, in die solche an Haltern der Karosserievorgesehenen Mittel rastend eingreifen. Da die Verschließelemente, Befestigungsteile und ausgeformten Teile auch aus Kunststoff bestehen, ist darüber hinaus sichergestellt, dass die Gelenke und auch die übrigen Teile nicht rosten können. Sie sind also unempfindlich gegen Feuchtigkeit, aber auch gegen versehentlich in die Tankmulde fließenden Kraftstoffe.

Des Weiteren kann auch innenseitig zugänglich ein Schalter zur manuellen Betätigung zum Schließen eines Stromkreises vorgesehen sein, der mit einer Steuereinrichtung verbunden ist, die mindestens die Betankungsart in Abhängigkeit von der Betätigung des Schalters registriert. Dieser Schalter kann auch außenseitig angebracht und über eine in die Mantelwand eingesetzte Membran betätigt werden. Die Erfindung lässt sich sowohl für den Anschluss eines Einspeisekopfes für Gas, Wasserstoff oder Benzin und Diesel in den jeweiligen Kombinationen verwenden.

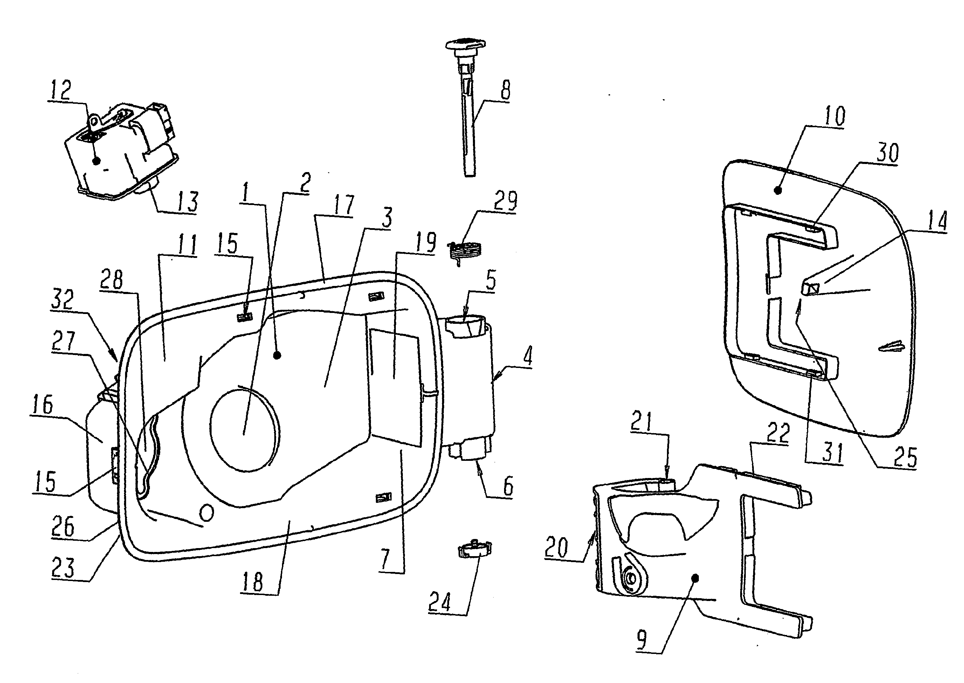

Die Erfindung wird nachfolgend anhand des in der Zeichnung in Form einer Explosionsdarstellung dargestellten Beispiels ergänzend erläutert.

Die Zeichnung zeigt in zerlegtem Zustand die wesentlichen Funktionseinheiten der Tankmulde. Die Tankmulde 1 weist eine Rückwand 3, eine rechte Mantelwand 7, eine linke Mantelwand 16 und obere und untere Mantelwände 17 und 18 auf. In der Rückwand 3 ist ein Durchgangsloch 2 zur Aufnahme eines Tankanschlussteils eingebracht. Durch diese Durchgangsöffnung 2 wird die Tankzuleitung mit ihrem Ende hindurchgesteckt, die in bekannter Weise mittels eines Drehverschlusses verschließbar ist. An der rechten Mantelwand ist eine Seitenkammer ausgeformt, die als Lagerkammer dient und oben- und untenseitig Lagerbohrungen 5 und 6 aufweist. Das durch die Kammerwand gebildete Schwenklager dient zur Lagerung eines Lagerhebels 9, der einen hinteren gebogenen Abschnitt 20 und einen vorderen geraden Abschnitt 22 aufweist. Am Ende des gebogenen Abschnitts befindet sich eine Lagerungsbohrung 21, die kongruent mit der Achse der Lagerungsbohrungen 5 und 6 bei der Montage verläuft. Gesichert wird der Lagerhebel 9 in dem Schwenklager 4 durch einen Lagerbolzen 8, der in der oberen Lagerungsbohrung 5 und in der unteren Lagerungsbohrung 6 geführt gelagert ist, während der Mittenteil fest in der Lagerbohrung verankert ist, so dass der Bolzen 8 sich beim Verschwenken des Lagerhebels 9 mit dreht. Der Lagerhebel 9 wird dabei durch eine Feder 29, die auf den Lagerbolzen 8 ein Drehmoment beim Öffnen der Klappe 10 bewirkt, verdreht. Auf den ebenen Abschnitt 22 des Lagerhebels 9 ist die Klappe 10 aufgesetzt und hieran mittels Rastformfedern befestigt, die an der Klappe 10 befestigt sind. Die Klappe 10 kann aus Kunststoff oder aus Blech bestehen. Es kann auch vorgesehen sein, dass an Stelle solcher Befestigungsfedern 30, 31 auch Rastansätze angespritzt sind, wenn die Klappe aus Kunststoff besteht, die dann in entsprechende Rastausnehmungen am Lagerhebel 9 einrasten.

Damit die Klappe 10 nicht aufschnellt, wenn sie entriegelt ist, ist ein Bremselement 24 in Verlängerung zum Bolzen 8 vorgesehen und mit diesem verbunden. Dieses Bremselement wirkt - wie aus der DE 203 05 291 U1 bekannt - auf den Bolzen 8 dämpfend, was eine zeitverzögerte Öffnung der Klappe gewährleistet. Als Besonderheit ist in der Tankmulde ferner eine Lagerkammer 11 vorgesehen, und zwar im Ausführungsbeispiel außenseitig eingebracht. Eine solche Lagerkammer, die durch Ausformung gebildet ist, kann auch innenseitig vorgesehen sein. In der oberen Wand der Lagerkammer 11 ist eine Öffnung 32 vorgesehen, durch die ein Schließelement 13 einer Verschließeinrichtung hindurchsteckbar ist, die in einem Gehäuse 12 angebracht ist. Es kann sich dabei beispielsweise um einen sogenannten Mikroaktuator handeln, der ein elektromotorisch angetriebenes Schließelement aufweist, das eine Notöffnung und/oder Push-Push-Betätigung durch Formgebung des Hakens sicherstellt. Durch Formgebung des Hakens kann darüber hinaus auch die Tankklappe 10 in eine spaltförmige Öffnungsposition verschwenkt werden, bevor die Feder 29 die vollständige Öffnung bewerkstelligt. Ein solcher Mikroaktuator ist für diesen Zweck bekannt. Er braucht wenig Platz und ist- da das Verschließelement und die übrigen Elemente im wesentlichen aus Kunststoff bestehen - auch im Winter einsatzfähig.

Die Tankmulde weist ferner für die bivalente Gasbetankung einen durch eine Schwächungsrille 27 ausbrechbaren Wandteil in der Rückwand auf. Dieser Wandteil kann im Bedarfsfall ausgebrochen werden, so dass eine zweite Öffnung zur Verfügung steht, um beispielsweise hierüber einen Tankanschluss für die Gasbetankung anschließen zu können.

Der Mikroaktuator kann ein derart ausgeformtes hakenförmiges Schließelement 13 aufweisen und mit einem Schaltelement gekoppelt sein, dass er als manuell betätigbare Drehfalle mit genutzt werden kann. Wird durch Fernentriegelung der Mikroaktuator veranlasst, das Schließelement 13 in eine erste Drehstellung zu bringen, in der der Haken den Schließbolzen freigibt, so kann vorgesehen sein, dass durch Druck auf die Tankklappe über die gegebene Drehfalle ein elektrischer Schalter mit kurzem Hub betätigt wird. Das Schaltsignal wird vom Steuergerät ausgewertet und der Mikroaktuator davon abhängig veranlasst, das Schließelement elektrisch um einen bestimmten Winkel zu drehen. Dabei gleitet der Schließbolzen auf einer Flanke des Hakens entlang und die Klappe 10 wird nach Art eines Auswerfers um einen Spalt aufgedrückt. Die Tankklappe 10 kann dann durch die Feder 29 im Tankklappenscharnier ganz aufgeschwenkt werden. Bei entsprechender Auslegung der Feder 29 kann die Tankklappe auch in dieser Position so lange gehalten werden, bis von Hand das Öffnen der Klappe ausgelöst wird. Wird der Steller des Schließelementes abgeschaltet, kann er über eine integrierte Feder im Mikroaktuator in die Position "verriegelt" zurückkehren. Beim Verriegeln wird die Tankklappe 10 zugedrückt, wodurch die Drehfalle des Schließbolzen 13 an der Tankklappe 10 hintergreift und so die Tankklappe 10 verriegelt. Ist der Öffnungsmechanismus verriegelt, so ist die beschriebene Soft-Touch-Funktion deaktiviert; der Klappenverschluss kann nicht geöffnet werden.

## Patentansprüche

1. Tankmulde aus Kunststoff zum Einsetzen in einen Karosseriedurchbruch in einem Kraftfahrzeug, aufweisend:
- ein Durchgangsloch (2) in der rückseitigen Wand (3) und/oder einen Stutzen hieran für den Anschluss oder das Durchstecken einer verschließbaren Tankzuleitung,
- ein im wesentlichen vertikal verlaufendes Schwenklager (4) mit horizontalen Lagerbohrungen (5, 6) oben- und untenseitig an einer seitlichen Mantelwand (7) der Tankmulde (1) für den Einsatz eines darin drehbar gelagerten Lagerbolzens (8), an dem ein Lagerhebel (9) einer die Tankmulde (1) verschließenden Klappe (10) befestigt ist,
- mindestens eine innen- und/oder außenseitige, an mindestens einer Mantelwand (7, 16, 17, 18) der Tankmulde (1) angeformte Lagerkammer (11) für die Aufnahme mindestens einer in einem Gehäuse (12) angeordneten steuerbaren Verschließeinrichtung zum Verriegeln der geschlossenen Klappe (10) mit einem motorisch und/oder von Hand betätigbaren, drehbar oder verschieblich gelagerten Schließelement (13), das einen Arretierungsansatz (14) an der Rückseite des Lagerhebels (9) oder der Klappe (10) in der Schließposition lösbar hintergreift,
- Einrichtungen (15) an den Außenseiten der Mantelwände (7, 16, 17, 18) zur Verrastung der Tankmulde (1) und/oder Befestigungsansätze zum Befestigen der Tankmulde (1) an der Karosserie und/oder an daran befestigten Trägern
**dadurch gekennzeichnet, daß**
- eine zweite, durch eine Schwächungsrille (27) abgegrenzte Durchgangsöffnung (28) in der Rückwand (3) für die bivalente Gasbetankung markiert oder angeformt ist, und dass nach dem Einbau oder bei der Vormontage der Tankmulde in die Ausnehmung der Karosserie der so abgegrenzte Wandteil zur Bildung der Durchgangsöffnung (28) ausbrechbar oder ausdrückbar ist.

2. Tankmulde nach Anspruch 1, **dadurch gekennzeichnet, dass** das Schwenklager (4) in einer an einer Seitenwand (7) seitlich vorstehend vorgesehenen Seitenkammer (19) angeordnet ist, und dass der Lagerhebel (9) einen bogenförmigen Abschnitt (20) mit einer senkrechten Lagerbohrung (21) für den Lagerbolzen (8) und einen ebenen Abschnitt (22) aufweist und in der Verschließstellung die Klappe (10) mit dem äußeren Randbereich an dem Öffnungsrand (23) der Tankmulde (1) anliegt und in der öffnungsstellung mindestens eine in etwa senkrechte Position zur Tankmuldenöffnung einnimmt.

3. Tankmulde nach Anspruch 2, **dadurch gekennzeichnet, dass** die Klappe (10) an dem ebenen Abschnitt (22) des Lagerhebels (20) lösbar, insbesondere mittels rückseitiger Rastelemente hieran, befestigt ist.

4. Tankmulde nach Anspruch 2 oder 3, **dadurch gekennzeichnet, dass** mit dem drehbaren Lagerbolzen (8) mindestens an einem Ende eine mechanische oder Viskose-Bremse (24), bestehend aus einem Rotor, der in einer Lagerkammer unter Aufbringung eines bestimmten Drehmomentes drehbar gelagert ist, gekoppelt ist, deren Gehäuse an einer Lagerwand des Schwenklagers (4) oder Wand der Lagerkammer (19) verdrehsicher befestigt ist.

5. Tankmulde nach Anspruch 1, **dadurch gekennzeichnet, dass** an der Klappe (10) oder an dem Lagerhebel (9) gegenüberliegend vom Schwenklager (4) ein Arretierungsansatz (14) mit einem senkrechten Verriegelungsabschnitt (25) vorgesehen ist, der in eine konturenangepasste Ausnehmung (26) in einem innenseitig vorgesehenen Ansatz an der dem Schwenklager (4) gegenüberliegenden Mantelwand (16) der Tankmulde eingreift, und dass der Verriegelungsabschnitt (25) von dem Schließelement (13) hintergriffen ist.

6. Tankmulde nach Anspruch 1, **dadurch gekennzeichnet, dass** die mindestens zweite Durchgangsöffnung (26) bereits als offenes Durchgangsloch vorgesehen ist.

7. Tankmulde nach Anspruch 1, **dadurch gekennzeichnet, dass** die Stirnseite der Tankmulde (1) mit einem umlaufenden, die Mantelwände außenseitig überstehenden rahmenförmigen Rand (23) versehen ist.

8. Tankmulde nach Anspruch 7, **dadurch gekennzeichnet, dass** rückseitige Rastelemente an den Außenseiten der Mantelwände (7, 16, 17, 18) mit der Rückseite des Randes (23) und der Karosseriewand derart zusammenwirken, dass die Tankmulde beim Einsetzen verrastet gehalten ist.

9. Tankmulde nach einem der vorhergehenden Ansprüche, **dadurch gekennzeichnet, dass** in der Draufsichtsdarstellung die Tankmulde (1) im wesentlichen rechteckig, rund oder oval ausgebildet ist.

10. Tankmulde nach einem oder mehreren der vorhergehenden Ansprüche, **dadurch gekennzeichnet, dass** die Tankmulde (1) mit der vormontierten Verschließeinrichtung (12), dem Lagerhebel (9), der Klappe (10), dem Lagerbolzen (8) und den weiteren Elementen eine Montageeinheit bildet.

11. Tankmulde nach Anspruch 1, **dadurch gekennzeichnet, dass** in der Lagerkammer (11) für die Verschließeinrichtung mindestens eine federnde Rastzunge vorgesehen ist, die das Gehäuse (12) der Verschließeinrichtung (12) arretiert.

12. Tankmulde nach Anspruch 1 oder 11, **dadurch gekennzeichnet, dass** die Verschließeinrichtung (12) einen Mikroaktuator mit einem elektrisch steuerbaren, um einen definierten Winkel hakenförmiges Schließelement (13), das in der Verschließstellung einen Schließbolzen oder Ansatz an der Rückseite der Klappe (10) oder an dem die Klappe (10) aufnehmenden Abschnitt (22) des Lagerhebels (9) hintergreift und durch Erregung mittels Strom in eine Öffnungsstellung zurückschwenkt.

13. Tankmulde nach Anspruch 1, **dadurch gekennzeichnet, dass** die Klappe (10) und der Lagerhebel (9) und das Verschließelement (13) ebenfalls aus Kunststoff bestehen und dass die Befestigungsansätze ausgeformte Teile sind.

14. Tankmulde nach Anspruch 12, **dadurch gekennzeichnet, dass** das hakenförmige Schließelement (13) eine Aufdrückgleitfläche aufweist, an der der Schließbolzen oder Ansatz an der Rückseite der Klappe (10) oder am Lagerhebel bei Drehung um einen bestimmten Winkel entlang gleitet, und dass durch Druck auf die Tankklappe 10) bei entriegeltem Mikroaktuator (12) ein Schalter betätigt wird, der einen Steller des Mikroaktuators (12) ansteuert und die Drehbewegung des Schließelementes (13) bewirkt, der die Tankklappe (10) nach Art eines Auswerfers um einen definierten Spalt öffnet, die in dieser Öffnungsstellung gehalten oder durch eine auf das Scharnier wirkende Feder (29) geöffnet wird, und dass das Schließelement durch eine im Aktuator integrierte Feder oder elektrisch gesteuert in die Verriegelungsposition zurückstellbar ist.

15. Tankmulde nach Anspruch 12, **dadurch gekennzeichnet, dass** sie einen innenseitig zugänglichen Schalter zur manuellen Betätigung zum Schließen eines Stromkreises aufweist, der mit einer Steuereinrichtung verbunden ist, die mindestens die Betankungsart in Abhängigkeit von der Betätigung des Schalters registriert.

## Claims

1. Tank trough of plastics material for insertion into a bodywork passage in a motor vehicle, having:
- a passage hole (2) in the rear wall (3) and/or a stub pipe thereat for connection or plugging through of a closable tank feed line,
- a substantially vertically extending pivot bearing (4) with horizontal bearing bores (5, 6) at the top side and bottom side at a lateral casing wall (7) of the tank trough (1) for insertion of a bearing pin (8), which is mounted therein to be rotatable and to which a bearing lever (9) of a flap (10) closing the tank trough (1) is fastened,
- at least one inner-side and/or outer-side bearing chamber (11), which is arranged at at least one casing wall (7, 16, 17, 18) of the tank trough (1), for the reception of at least one controllable closure device, which is arranged in a housing (12), for locking the closed flap (10) by a motorised and/or manually actuable, rotatably or slidably mounted closure element (13) which releasably engages behind a locking projection (14) at the rear side of the bearing lever (9) or of the flap (10) in the closed position,
- devices (15) at the outer sides of the casing walls (7, 16, 17, 18) for detenting the tank trough (1) and/or fastening projections for fastening the tank trough (1) to the bodywork and/or to mounts fastened thereat,
**characterised in that**
- a second passage opening (28), which is delimited by a weakening groove (27), is marked or formed in the rear wall (13) for the dual value filling and that after installation or during premounting of the tank trough in the recess of the bodywork the thus-delimited wall part can be broken away or pressed out for formation of the passage opening (28).

2. Tank trough according to claim 1, **characterised in that** the pivot bearing (4) is arranged in a side chamber (19) provided to be laterally protruding at a side wall (7) and that the bearing lever (9) has a curved section (20) with a perpendicular bearing bore (21) for the bearing pin (8) and a planar section (22) and in the closed setting the flap (10) bears by the outer edge region against the opening edge (23) of the tank trough (1) and in the open setting adopts an at least approximately vertical position relative to the tank trough opening (3).

3. Tank trough according to claim 2, **characterised in that** the flap (10) is releasably fastened to the planar section (22) of the bearing lever (20), in particular by means of rear-side detent elements thereat.

4. Tank trough according to claim 2 or 3, **characterised in that** a mechanical or viscous brake (24), consisting of a rotor which is rotatably mounted in the bearing chamber under application of a specific torque, is coupled with the rotatable bearing pin (8) at at least one end, the housing of which is fastened to a bearing wall of the pivot lever (4) or wall of the bearing chamber (19) to be secure against rotation.

5. Tank trough according to claim 1, **characterised in that** a locking projection (14) of a vertical locking section (25) is provided at the flap (10) or at the bearing lever (9) opposite the pivot bearing (4), which projection engages in a matching contour recess (26), in a projection, which is provided at the inner side, at the casing wall (16) of the tank trough opposite the pivot bearing (4), and that the closing element (13) engages behind the locking section (25).

6. Tank trough according to claim 1, **characterised in that** the at least second passage opening (26) is provided as an already open passage hole.

7. Tank trough according to claim 1, **characterised in that** the end of the tank trough (1) is provided with an encircling frame-shaped edge (23) protruding at the outer side beyond the casing walls.

8. Tank trough according to claim 7, **characterised in that** rear-side detent elements at the outer sides of the casing walls (7, 16, 17, 18) co-operate with the rear side of the edge (23) and the bodywork wall in such a manner that the tank trough is held by detenting when inserted.

9. Tank trough according to any one of the preceding claims, **characterised in that** the tank trough (1) is of substantially rectangular, round or oval construction in plan view representation.

10. Tank trough according to one or more of the preceding claims, **characterised in that** the tank trough (1) together with the premounted closure device (12), the bearing lever (9), the flap (10), the bearing pin (8) and the further elements forms a subassembly.

11. Tank trough according to claim 1, **characterised in that** at least one resilient detent tongue which locks the housing (12) of the closure device (12) is provided in the bearing chamber (11) for the closure device.

12. Tank trough according to claim 1 or 11, **characterised in that** the closure device (12) comprises a micro-actuator with an electrically controllable closure element (13), which is hook-shaped through a defined angle and which in the closed setting engages behind a locking pin or projection at the rear side of the flap (10) or at the section (22) - which receives the flap (10) - of the bearing lever (9) and pivots back into an open setting through excitation by means of current.

13. Tank trough according to claim 1, **characterised in that** the flap (10) and the bearing lever (9) and the closure element (13) equally consist of plastics material and that the fastening projections are moulded parts.

14. Tank trough according to claim 12, **characterised in that** the hook-shaped closure element (13) has a pressure slide surface along which the locking pin or projection at the rear side of the flap (10) or at the bearing lever slides on rotation through a defined angle and that through pressure on the tank flap (10) when the micro-actuator (12) is unlocked a switch is actuated which controls a setter of the micro-actuator (12) in drive and causes the rotational movement of the closure element (13), which opens the tank flap (10) in the manner of an ejector by a defined gap, which is kept in this open setting or is opened by a spring (29) acting on the hinge, and that the closure element can be restored to the locking position by a spring integrated in the actuator or in electrically controlled manner.

15. Tank trough according to claim 12, **characterised in that** it comprises a switch, which is accessible at the inner side, for manual actuation for closing of a current circuit with which is connected a control device which registers at least one form of tank filling in dependence on the actuation of the switch.

## Revendications

1. Compartiment d'entrée de réservoir en matière plastique à insérer dans une ouverture de carrosserie dans un véhicule automobile, présentant :
- un trou de passage (2) dans la paroi arrière (3) et/ou une tubulure au niveau de celle-ci pour le raccordement ou l'enfichage d'une conduite d'alimentation du réservoir pouvant être fermée,
- un palier pivotant (4) s'étendant de manière essentiellement verticale avec des alésages de palier (5, 6) horizontaux en haut et en bas au niveau d'une paroi d'enveloppe latérale (7) du compartiment d'entrée de réservoir (1) pour l'insertion d'un axe de palier (8) qui y est monté de manière rotative, au niveau duquel est fixé un levier de palier (9) d'une trappe (10) fermant le compartiment d'entrée de réservoir (1),
- au moins une chambre de stockage (11) côté intérieur et/ou extérieur, formée au niveau d'au moins une paroi d'enveloppe (7, 16, 17, 18) du compartiment d'entrée de réservoir (1) pour le logement d'au moins un dispositif de fermeture commandé agencé dans un boîtier (12) servant à verrouiller la trappe (10) fermée avec un élément de fermeture (13) actionnable par moteur et/ou manuellement, monté de manière rotative ou coulissante, qui vient en prise amovible derrière une saillie d'arrêt (14) au niveau de la face arrière du levier de palier (9) ou de la trappe (10) dans la position de fermeture,
- des dispositifs (15) sur les côtés extérieurs des parois d'enveloppe (7, 16, 17, 18) pour l'enclenchement du compartiment d'entrée de réservoir (1) et/ou des saillies de fixation pour la fixation du compartiment d'entrée de réservoir (1) à la carrosserie et/ou à des supports qui y sont fixés,
**caractérisé en ce que**
un deuxième orifice de passage (28) délimité par une rainure d'affaiblissement (27) est marqué ou formé dans la paroi arrière (3) pour le plein en gaz bivalent et **en ce qu'**après le montage ou lors du prémontage du compartiment d'entrée de réservoir dans l'évidement de la carrosserie, la partie de paroi ainsi délimitée peut être enlevée par rupture ou retirée par pression pour former l'orifice de passage (28).

2. Compartiment d'entrée de réservoir selon la revendication 1, **caractérisé en ce que** le palier pivotant (4) est disposé dans une chambre latérale (19) prévue en saillie latérale au niveau d'une paroi latérale (7), et **en ce que** le levier de palier (9) présente une section arquée (20) avec un alésage de palier vertical (21) pour l'axe de palier (8) et une section plane (22), et la trappe (10) s'appuie dans la position de fermeture avec la zone de bord extérieure contre le bord de l'orifice (23) du compartiment d'entrée de réservoir (1) et adopte dans la position d'ouverture au moins une position à peu près perpendiculaire par rapport à l'orifice du compartiment d'entrée de réservoir.

3. Compartiment d'entrée de réservoir selon la revendication 2, **caractérisé en ce que** la trappe (10) est fixée de manière amovible à la section plane (22) du levier de palier (9), en particulier au moyen d'éléments d'arrêt situés sur la face arrière.

4. Compartiment d'entrée de réservoir selon la revendication 2 ou 3, **caractérisé en ce qu'**un frein mécanique ou de viscose (24), constitué d'un rotor qui est monté de manière rotative dans une chambre de stockage lors de l'application d'un couple donné, est couplé avec l'axe de palier (8) rotatif à au moins une extrémité, dont le boîtier est fixé bloqué en rotation à une paroi du palier pivotant (4) ou à la paroi de la chambre de stockage (19).

5. Compartiment d'entrée de réservoir selon la revendication 1, **caractérisé en ce qu'**une saillie d'arrêt (14) avec une section de verrouillage verticale (25) est prévue au niveau de la trappe (10) ou au niveau du levier de palier (9) en face du palier pivotant (4), laquelle saillie vient en prise dans un évidement (26) adapté au contour dans une saillie prévue côté intérieur au niveau de la paroi d'enveloppe (16) du compartiment d'entrée de réservoir en face du palier pivotant (4) et **en ce que** la section de verrouillage (25) est engagée à l'arrière par l'élément de fermeture (13).

6. Compartiment d'entrée de réservoir selon la revendication 1, **caractérisé en ce qu'**au moins le deuxième orifice de passage (28) est déjà prévu sous forme de trou de passage ouvert.

7. Compartiment d'entrée de réservoir selon la revendication 1, **caractérisé en ce que** la face avant du compartiment d'entrée de réservoir (1) est dotée d'un bord (23) périphérique, en forme de cadre en saillie du côté extérieur des parois d'enveloppe.

8. Compartiment d'entrée de réservoir selon la revendication 7, **caractérisé en ce que** les éléments d'arrêt arrière coopèrent sur les côtés extérieurs des parois d'enveloppe (7, 16, 17, 18) avec la face arrière du bord (23) et la paroi de carrosserie de telle sorte que le compartiment d'entrée de réservoir est maintenu enclenché lors de l'insertion.

9. Compartiment d'entrée de réservoir selon l'une quelconque des revendications précédentes, **caractérisé en ce que** dans la représentation en élévation, le compartiment d'entrée de réservoir (1) est réalisé de manière essentiellement rectangulaire, circulaire ou ovale.

10. Compartiment d'entrée de réservoir selon une ou plusieurs des revendications précédentes, **caractérisé en ce que** le compartiment d'entrée de réservoir (1) forme avec le dispositif de fermeture prémonté (12), le levier de palier (9), la trappe (10), l'axe de palier (8), et les autres éléments, une unité de montage.

11. Compartiment d'entrée de réservoir selon la revendication 1, **caractérisé en ce qu'**au moins une languette d'arrêt élastique, qui arrête le boîtier (12) du dispositif de fermeture, est prévue dans la chambre de stockage (11) pour le dispositif de fermeture.

12. Compartiment d'entrée de réservoir selon la revendication 1 ou 11, **caractérisé en ce que** le dispositif de fermeture (12) présente un micro-actionneur avec un élément de fermeture (13) en forme de crochet autour d'un angle défini, à commande électrique, qui, dans la position de fermeture, vient en prise derrière un axe de fermeture ou saillie au niveau de la face arrière de la trappe (10) ou au niveau de la section (22) du levier de palier (9) logeant la trappe (10) et retourne par pivotement dans une position d'ouverture par excitation au moyen d'un courant.

13. Compartiment d'entrée de réservoir selon la revendication 1, **caractérisé en ce que** la trappe (10), le levier de palier (9) et l'élément de fermeture (13) sont également en plastique et **en ce que** les saillies de fixation sont des pièces façonnées.

14. Compartiment d'entrée de réservoir selon la revendication 12, **caractérisé en ce que** l'élément de fermeture (13) en forme de crochet présente une surface lisse d'application au niveau de laquelle l'axe de fermeture ou saillie glisse le long de la face arrière de la trappe (10) ou du levier de palier lors de la rotation d'un certain angle, et **en ce qu'**un interrupteur est actionné par pression sur la trappe de réservoir (10) lorsque le micro-actionneur est déverrouillé, lequel interrupteur commande un positionneur du micro-actionneur et induit le mouvement de rotation de l'élément de fermeture (13), qui ouvre à la manière d'un éjecteur la trappe de réservoir (10) d'une fente définie, laquelle trappe est maintenue dans cette position d'ouverture ou est ouverte par un ressort (29) agissant sur la charnière et **en ce que** l'élément de fermeture peut être remis dans la position de verrouillage par un ressort intégré dans l'actionneur ou par commande électrique.

15. Compartiment d'entrée de réservoir selon la revendication 12, **caractérisé en ce qu'**il présente un interrupteur accessible côté intérieur pour l'actionnement manuel pour fermer un circuit électrique, qui est relié à un dispositif de commande, lequel dispositif enregistre au moins le type de plein en fonction de l'actionnement de l'interrupteur.
